Europäisches Patentamt

European Patent Office

Office européen des brevets

(19)

(11) Veröffentlichungsnummer : **0 188 706**
**B1**

(12)    EUROPÄISCHE PATENTSCHRIFT

(45) Veröffentlichungstag der Patentschrift :
**17.08.88**

(51) Int. Cl.⁴ : **B 60 G 17/04**

(21) Anmeldenummer : **85115211.6**

(22) Anmeldetag : **30.11.85**

(54) Steueranlage zum Heben und Senken des Fahrzeugaufbaus von luftgefederten Fahrzeugen.

(30) Priorität : **14.12.84 DE 3445579**

(43) Veröffentlichungstag der Anmeldung :
**30.07.86 Patentblatt 86/31**

(45) Bekanntmachung des Hinweises auf die Patenterteilung : **17.08.88 Patentblatt 88/33**

(84) Benannte Vertragsstaaten :
**FR GB IT**

(56) Entgegenhaltungen :
**DE-A- 2 430 138**
**DE-A- 2 942 081**
**DE-A- 3 300 662**
**DE-C- 3 344 022**

(73) Patentinhaber : **Graubremse GmbH**
**Eppelheimer Strasse 76**
**D-6900 Heidelberg (DE)**

(72) Erfinder : **Blanz, Roland**
**D-6901 Heiligkreuzsteinach (DE)**

(74) Vertreter : **Patentanwälte Dipl.-Ing. Rudolf Bibrach**
**Dipl.-Ing. Elmar Rehberg**
**Postfach 1453 Pütterweg 6**
**D-3400 Göttingen (DE)**

EP 0 188 706 B1

## Beschreibung

Die Erfindung bezieht sich auf eine Steueranlage zum willkürlichen Heben und Senken des Fahrzeugaufbaus von luftgefederten Fahrzeugen mit Niveauregelung, mit einer Druckluftquelle, mindestens einem Niveauregelventil, mindestens einer Fahrzeugachse zugeordneten Luftfederbälgen, die zur Einregelung eines Sollabstands zwischen Fahrzeugaufbau und Fahrzeugachse durch das zugeordnete Niveauregelventil mit der Druckluftquelle oder einem drucklosen Auslaß verbindbar sind und einem in die Leitungsverbindungen der Niveauregelventile mit den Luftfederbälgen oder mit der Druckluftquelle und dem drucklosen Auslaß eingebauten Schaltventil mit den Stellungen Heben, Senken, Fahrt und Stop, das mindestens einen über einen elektrischen Schalter und zwei Magnetventile fernbetätigbaren Schieber oder eine Ventilkonstruktion aufweist und die Leitungsverbindung in der Stellung Fahrt freigibt und in den übrigen Stellungen unterbricht und die Luftfederbälge in der Stellung Heben mit der Druckluftquelle und in der Stellung Senken mit dem drucklosen Auslaß verbindet.

Eine derartige Steueranlage ist in der am 27.06.85 veröffentlichten DE-C-3 344 022 beschrieben. Dabei weist das Schaltventil nur einen Schieber auf, der durch einen elektrischen Schalter für die vier Stellungen über zwei Magnetventile derart fernbetätigbar ist, daß er aus einer Ruhelage bei Erregung des ersten Magnetventils allein um einen ersten Weg, bei Erregung des zweiten Magnetventils um einen zweiten, vom ersten verschiedenen Weg und bei Erregung beider Magnetventile um einen der Summe des ersten und des zweiten Weges entsprechenden dritten Weg verschiebbar ist. Dabei sind im Schaltventil und am Schieber die Leitungsverbindungen und die entsprechenden Dichtungen so angeordnet und ausgebildet, daß beispielhaft die Stellung Fahrt der nicht erregten Stellung der beiden Magnetventile zugeordnet ist, während in der Stellung Stop eines der beiden Magnetventile erregt ist. Diese Zuordnung der Stellungen ist insofern normal und sinnvoll als während der Fahrt, die im Vergleich zu den übrigen Stellungen wesentlich langzeitiger in Erscheinung tritt, die Magnetventile frei von Strom gehalten sind. Gleichzeitig ist damit sichergestellt, daß bei Stromausfall während der Fahrt und intakter Druckluftversorgung die Luftfederbälge ordnungsgemäß über das oder die Niveauregelventile mit Druckluft versorgt werden. Es gibt jedoch auch Betriebszustände, bei denen eine solche Zuordnung als nachteilig empfunden werden kann.

In der am 16.01.86 veröffentlichten deutschen Patentanmeldung DE-A-34 24 670 ist eine ähnliche Anlage beschrieben, bei der das Schaltventil mehrere in einem gemeinsamen Gehäuse angeordnete Einzelschieber aufweist, die gemeinsam über zwei über die Magnetventile ansteuerbare Kolben gemeinsam gleichsinnig betätigbar sind. Auch hierbei ist beispielhaft die Stellung Fahrt dem nicht-erregten Zustand der beiden Magnetventile zugeordnet, so daß sich bei Stromausfall während der Fahrt und intakter Druckluftversorgung die normale druckmäßige Versorgung der Luftfederbälge ergibt.

Die DE-A-2 645 468 zeigt eine Steueranlage mit einem elektrischen Schalter und unter Verwendung von zwei Magnetventilen, die jedoch einem Luftfederventil vorgeschaltet sind. Das eine Magnetventil ist in einer Steuerleitung angeordnet, während das andere Magnetventil in der Vorratsleitung für eine Versorgung des Luftfederventils vorgesehen ist. Mit Hilfe dieser beiden Magnetventile kann neben den Funktionen Heben und Senken nur noch eine dritte, neutrale Stellung eingesteuert werden, in der weder ein Anheben noch ein Absenken des Fahrzeugaufbaus erfolgen soll.

Die Einstellung der Stellung Fahrt bei stromlosen Magnetventilen entspricht der normalen Stellung, weil die Magnetventile somit von einer Dauerbelastung freigehalten bleiben. Muß jedoch ein solches Fahrzeug z. B. in eine Halle hineingefahren werden, die nur eine begrenzte Höhe aufweist, zu deren Unterfahren es erforderlich ist, den Fahrzeugaufbau in die Stellung Senken abzusenken, und fällt die elektrische Versorgung an den Magnetventilen aus, dann stellt sich die Stellung Fahrt automatisch ein, so daß der Fahrzeugaufbau angehoben wird und damit an der Halle anstößt. Wenn bei einem anderen Schadensfalle bei intakter elektrischer Versorgung während der Fahrt ein Defekt in der Druckluftleitung zwischen Niveauregelventil und Schaltventil auftritt, kann je nach der Schaltung auch der Fahrzeugaufbau absinken. Damit kann zwar ein Notbetrieb aufrechterhalten werden, jedoch ist die Luftfederanlage damit außer Funktion.

Der Erfindung liegt die Aufgabe zugrunde, eine Steueranlage der eingangs beschriebenen Art so weiterzubilden, daß bei druckmäßigem und/oder elektrischem Ausfall der Fernbetätigung alle wesentlichen pneumatischen Leitungsverbindungen voneinander abgesperrt werden, so daß bei Eintritt eines derartigen Defektes der dem jeweiligen Betriebszustand gerade herrschende Druck in den Luftfederbälgen abgesperrt und damit aufrechterhalten bleibt.

Erfindungsgemäß wird dies dadurch erreicht, daß bei drucklosem Schaltventil und/oder stromlosen Magnetventilen der Schieber des Schaltventils so ausgebildet ist und sich in einer solchen Ausgangsstellung befindet, daß die pneumatischen Leitungen von dem Schaltventil zu dem Niveauregelventil einerseits und zu den Luftfederventilen andererseits jeweils abgesperrt sind, und daß die Stellungen Heben, Senken und Fahrt den drei betätigten Stellungen der beiden Magnetventile zugeordnet sind. Die vorliegende Erfindung verläßt den normalen Stand der Technik und ordnet der nicht betätigten Ausgangsstellung der beiden Magnetventile bzw. des oder der Schieber des Schaltventils nicht mehr die Stellung Fahrt, sondern nunmehr die Stellung Stop zu. Durch diese ungewöhnliche Maßnahme muß zwar in Kauf genommen werden, daß z. B. bei Ausfall der elektrischen Versorgung ein Nachspeisen der Luftfederbälge bei schleichender Undichtheit in der Anlage nicht mehr erfolgen kann, jedoch werden durch das Absperren der Luftfederbälge in diesem Schadensfall andere Vorteile erreicht. Beispielsweise kann eine niedrige Halle ohne die Gefahr der Beschädigung auch dann durchfahren werden, wenn zwischenzeitlich die elektrische Versorgung ausfällt. Die Erfindung läßt sich bei ganz verschiedener Ausbildung des elektrischen Schaltventils anwenden. Dieses Schaltventil kann einen oder mehrere Schieber aufweisen oder aber auch ganz anders, z. B. nach Ventilbauart, aufgebaut sein. Es ist auch nicht unbedingt erforderlich, daß die beiden Kolben zur Realisierung der unterschiedlichen Wege auf einer Seite des Ventils angeordnet sind und sich gleichsinnig bewegen. Auch eine gegensinnige Bewegung und/oder eine getrennte Anordnung der Kolben am einen und am anderen Ende des oder der Schieber ist durchaus möglich.

Wenn die Stellung Fahrt der Betätigung nur eines Magnetventils und die Stellung Heben der Betätigung beider Magnetventile zugeordnet ist, wird der Vorteil erreicht, daß in der Stellung Fahrt, die vergleichsweise langzeitig eingeschaltet bleibt, den noch nur ein Magnetventil dauernd erregt bleibt.

Zu dem Schaltventil gehört ein elektrischer Schalter oder auch ein Taster. Im Falle der Anwendung eines Schalters sollte dieser eine Mittelstellung aufweisen, die der Stellung Stop zugeordnet ist, wobei die drei übrigen Stellungen nur aus dieser Mittelstellung oder über diese Mittelstellung erreichbar sein sollten. Die Reihenfolge der Stellungen des Schalters sagt zwar immer noch nichts über die Reihenfolge der Stellungen des Schaltventils aus, jedoch ist von der Betätigungsreihenfolge des Schalters her insoweit ein vorteilhafter Ablauf gewährleistet, als die drei aktiven Stellungen Heben, Senken und Fahrt jeweils nachfolgend durch die Stellung Stop und nur durch diese Stellung Stop beendet werden können. Bei Verwendung eines Tasters kann die Anordnung so getroffen sein, daß z. B. der der Stellung Heben zugeordnete Tastknopf nach seinem Loslassen wieder die Stellung Stop einstellt. An sich lassen sich, wenn der stromlosen Ausgangslage die Stellung Stop zugeordnet ist, die übrigen drei aktiven Stellungen Heben, Senken und Fahren in insgesamt sechs verschiedenen Reihenfolgen anordnen, wie anhand der Ausführungsbeispiele noch erläutert wird. Diese Anordnung ist aber nun wiederum unabhängig von der Ausbildung des Schalters bzw. des Tasters.

Um den Nachteil auszuschließen, der insoweit mit der Erfindung verbunden ist, als in der Stellung Fahrt mindestens ein Magnetventil erregt sein muß, ist es auch möglich, den Magnetventilen des Schaltventils einen zeitabhängigen Unterbrecher vorzuschalten. Dieser Unterbrecher sorgt dafür, daß in einer oder mehreren der aktiven Stellungen das oder die Magnetventile jeweils nur für einen begrenzten Zeitraum erregt werden können. Der Unterbrecher kann z. B. nur wirksam sein, wenn die aktive Stellung Fahrt eingeschaltet wird. In diesem Falle wird die druckmäßige Versorgung der Luftfederbälge über das oder die Niveauregelventile nur für einen gewissen begrenzten Zeitraum von einigen Sekunden oder allenfalls wenigen Minuten durchgeführt, so daß man davon ausgehen kann, daß die Luftfederbälge entsprechend dem Beladungszustand mit Druckluft beschickt sind. Sodann kann zeitabhängig die elektrische Steuerleitung des oder der betreffenden Magnetventile unterbrochen werden, so daß die Stellung Stop eingestellt wird, in der die Luftfederbälge mit Hilfe des Schaltventils abgesperrt und verriegelt werden. Damit ergibt sich neben anderen Vorteilen ein sehr geringer Luftverbrauch. Es kann auch in einfacher Weise eine mehrkreisige Ausbildung der Luftfedern realisiert werden, wobei vorteilhaft eben nur ein Niveauregelventil eingesetzt zu werden braucht. Andererseits ist es natürlich möglich, diesen Unterbrecher nicht nur der Stellung Fahrt, sondern auch den beiden übrigen aktiven Stellungen Heben und Senken zuzuordnen bzw. vorzuschalten, so daß damit der weitere Vorteil eintritt, daß bei Auslösung eines Hebevorganges dieser nur eine gewisse Zeit andauert und damit ein Anheben des Fahrzeugaufbaus nur um einen gewissen Betrag erfolgt. Ist dieser Hebevorgang z. B. nicht ausreichend, so kann die Steuerbewegung ein zweites Mal durchgeführt werden.

Einige Ausführungsbeispiele der Erfindung werden anhand der Zeichnungen beschrieben. Es zeigt :

Fig. 1 die wesentlichen Teile einer ersten Steueranlage in der Stellung Stop,

Fig. 2 die Steueranlage gemäß Fig. 1 in der Stellung Fahrt,

Fig. 3 die Steueranlage gemäß Fig. 1 in der Stellung Senken,

Fig. 4 die Steueranlage gemäß Fig. 1 in der Stellung Heben,

Fig. 5 eine weitere Ausführungsform der Steueranlage mit einem vergleichsweise einfacher ausgebildeten Schaltventil und unter Verwendung nur eines Niveauregelventils in der Stellung Stop, und

Fig. 6 eine weitere Ausführungsform der Steueranlage mit einem Schaltventil mit nur einem Schieber.

Ein elektrischer Schalter 1 gestattet die Einstellung der angegebenen fünf Stellungen, wobei die Stellung Stop doppelt jeweils im Anschluß an die Stellung Heben bzw. Senken vorgesehen ist.

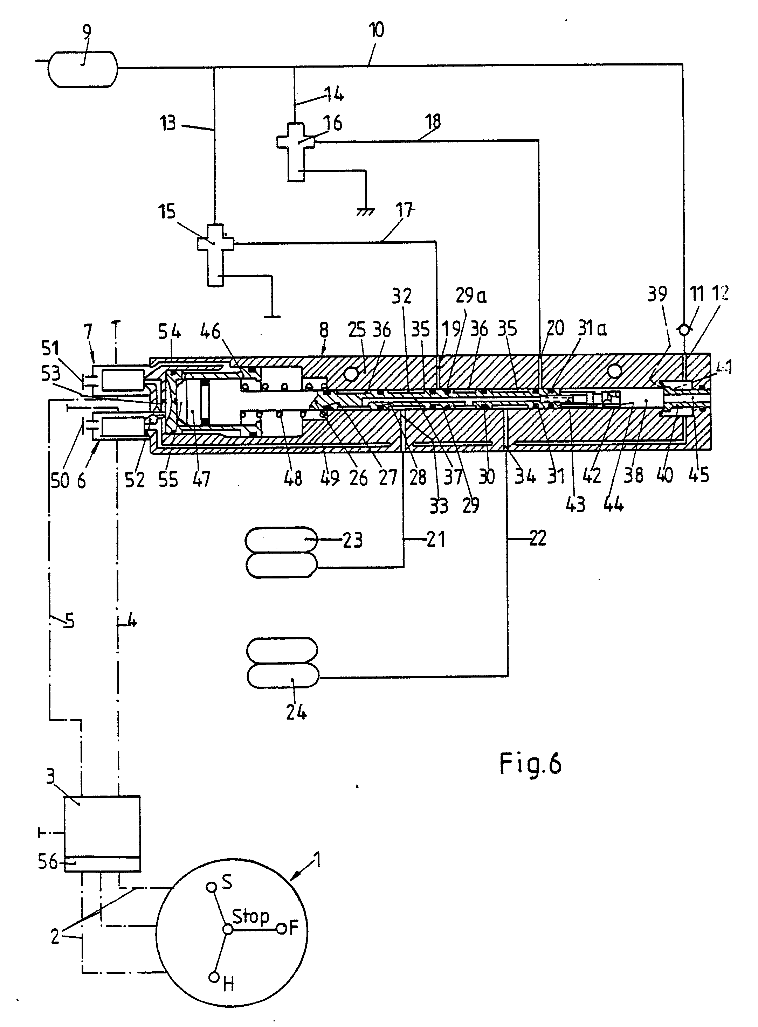

Zwischen den Stellungen Heben und Senken kann die Stellung Fahren angeordnet sein. Grundsätzlich kann die Anordnung auch in anderer Weise getroffen werden, wie z. B. Fig. 6 erkennen läßt.

Vier Stellungen sind erforderlich. Entsprechende elektrische Verbindungsleitungen 2 führen zu einer Stromversorgungs- und Verarbeitungseinrichtung 3. Zwei elektrische Leitungen 4 und 5 führen zu einem ersten Magnetventil 6 bzw. zu einem zweiten Magnetventil 7, die bereits an oder in der Nähe eines pneumatischen Schaltventils 8 angeordnet sind, welches am Fahrzeugaufbau bzw. in der Nähe der zu regelnden Achse bzw. der Luftfederbälge angeordnet sein kann.

Es ist eine nicht dargestellte übliche pneumatische Druckluftquelle vorgesehen, die einen Vorratsbehälter 9 speist. Von dort führt eine pneumatische Leitung 10 über ein Rückschlagventil 11 zu einem Anschluß 12 am Schaltventil 8. Weitere pneumatische Leitungen 13 und 14 führen zu Niveauregelventilen 15 und 16, die in bekannter Weise ausgebildet sind. Leitungen 17 und 18 führen zu Anschlüssen 19 und 20 am pneumatischen Schaltventil. Über Leitungen 21 und 22 sind Luftfederbälge 23 bzw. 24 angeschlossen. Die Luftfederbälge 23 können z. B. der Vorderachse und die Luftfederbälge 24 der Hinterachse zugeordnet sein. Auch ein Aufteilung in rechts und links an einer Achse vorgesehene Luftfederbälge oder eine sonstige Aufteilung ist möglich. Die Leitung 13, das Niveauregelventil 15, die Leitungen 17 und 22 und der Luftfederbalg 24 bilden einen Luftfederkreis. Analoges gilt für den zweiten dargestellten Luftfederkreis. Es versteht sich, daß das pneumatische Schaltventil 8 auch in einfacher Weise für einen dritten oder auch einen vierten Luftfederkreis ausgebildet sein kann. Es ist auch möglich, anstelle der beiden Niveauregelventile 15 und 16 nur ein Niveauregelventil vorzusehen, so daß die Zweikreisigkeit der beiden Luftfederkreise dann erst am Schalventil 8 beginnt.

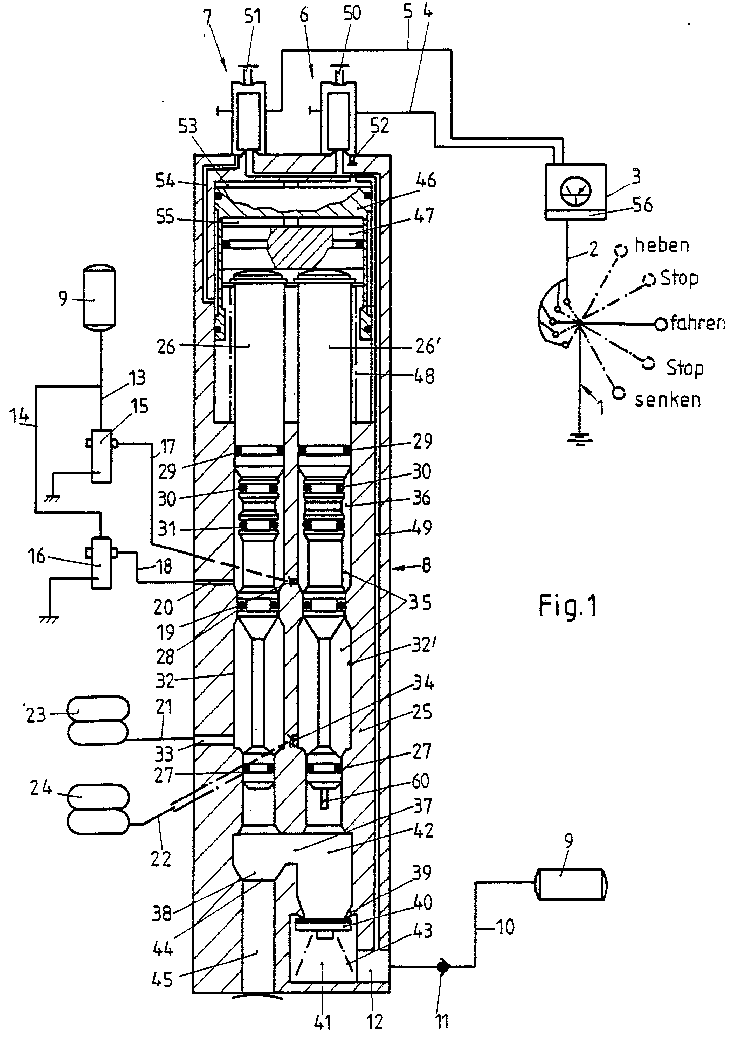

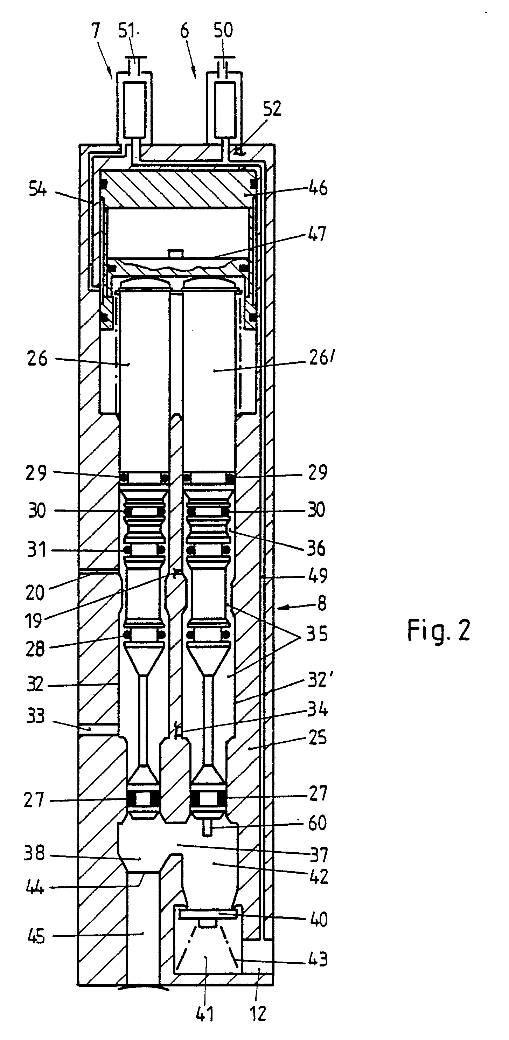

Im einzelnen besitzt das Schaltventil 8 ein Gehäuse 25, in welchem mehrere Einzelschieber 26, 26' verschieblich gelagert sind. Die Einzelschieber 26 und 26' weisen umlaufende Dichtungen 27, 28, 29, 30, 31 auf, die in Relation zu der Gehäuseausbildung, wie dargestellt und zu den Anschlüssen 19, 20 sowie weiteren Anschlüssen 33 und 34 für die Luftfederbälge 23 bzw. 24 vorgesehen sind. Im Gehäuse 25 sind zwei hier gestuft ausgebildete Bohrungen 32 und 32' vorgesehen, in denen die Einzelschieber 26 und 26' gleitend und dichtend geführt sind. Zwischen den Dichtungen 27 und 31 ist an den beiden Einzelschiebern 26 und 26' eine durch die Dichtung 28 jeweils unterbrochene umlaufende Nut 35 vorgesehen, durch die in Verbindung mit den entsprechend abgesetzten Bohrungen 32 und 32' der Anschluß 20 mit dem Anschluß 33 einerseits und der Anschluß 19 mit dem Anschluß 34 andererseits in der Stellung Fahrt (Fig. 2) verbunden ist. In der dargestellten Ausgangs- bzw. Ruhelage gemäß Fig. 1, die der Stellung Stop entspricht, sind die beiden Magnetventile 6 und 7 nicht erregt und sowohl die Anschlüsse 19 und 20 zu den Niveauregelventilen 15 und 16 als auch die Anschlüsse 33 und 34 zu den Luftfederbälgen 23 und 24 sind abgesperrt. Zwischen den Dichtungen 30 und 31 bzw. 29 und 31 kann eine weitere umlaufende Nut 36 vorgesehen sein. Ein Verbindungskanal 37 führt zu einem Auslaßraum 38 und andererseits zu einem Einlaßventil 39, 40 aus einem Ventilkörper 40 und einem Gehäuserand 39. Über eine Einlaßkammer 41 steht Druckluft über den Anschluß 12 an. Unterhalb der Einzelschieber 26 und 26' ist ein Druckraum 42 vorgesehen, von dem über den Verbindungskanal 37 einerseits das Einlaßventil 39, 40 und andererseits das Auslaßventil 27, 44 erreichbar ist, welches von der Dichtung 27 und einem Rand 44 am Gehäuse 25 gebildet wird. Der Ventilkörper 40 ist auf einer Feder 43 gehäuseseitig abgestützt. Eine Entlüftungsbohrung 45 führt von dem Auslaßraum 38 in die Atmosphäre. Einzelschieber 26' besitzt einen Fortsatz 60 zur Betätigung des Einlaßventiles 39, 40. Der Hub dieses Fortsatzes 60 bzw. des Einzelschiebers 26' zur Betätigung des Ventilkörpers 40 des Einlaßventils 39, 40 ist in seiner Geometrie entsprechend abgestimmt. Entsprechendes gilt für die Anordnung der anderen Dichtungen an den Einzelschiebern 26 und 26' in Verbindung mit den gestuften Bohrungen 32 und 32'.

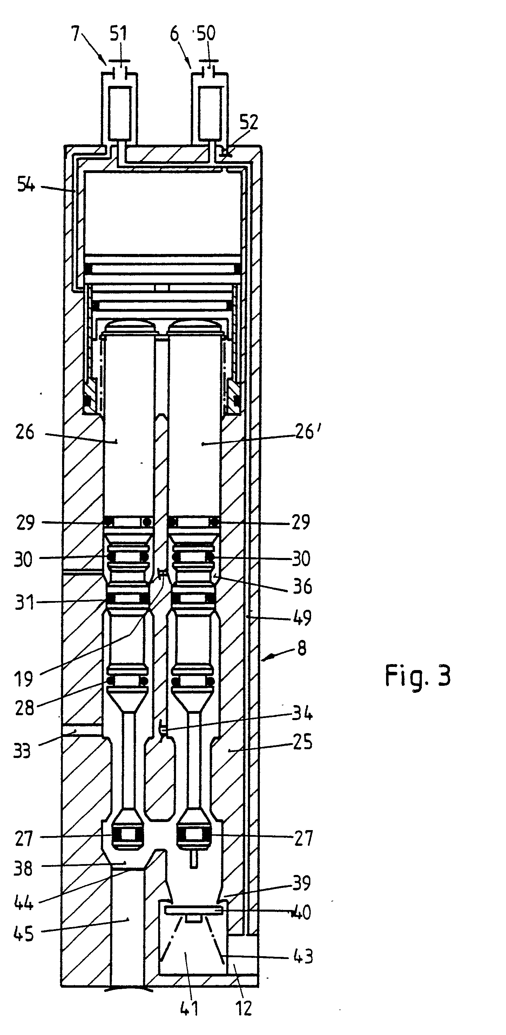

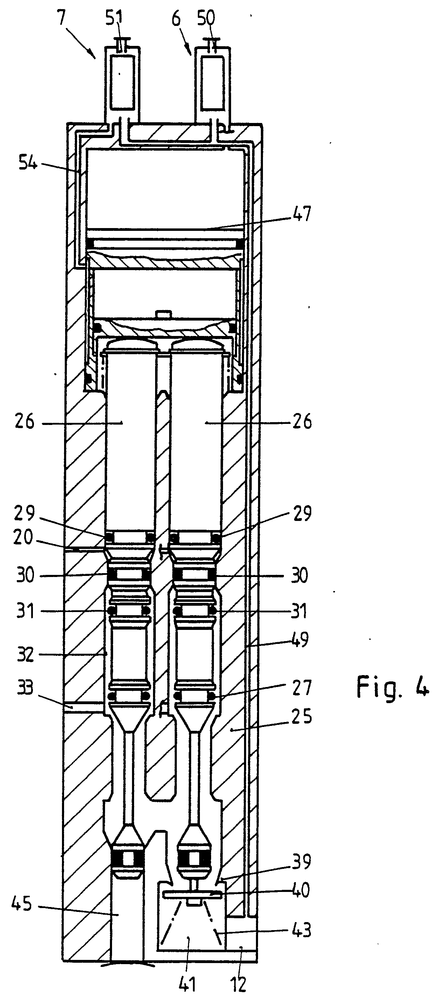

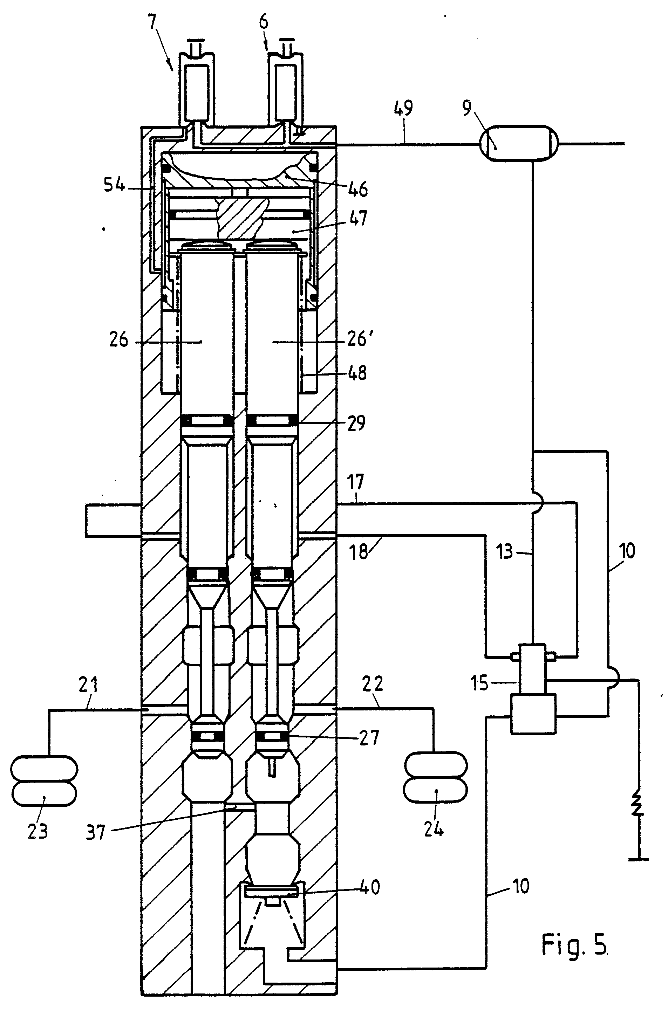

Auf der anderen Seite der Einzelschieber 26, 26' sind in der Nähe der Magnetventile 6 und 7 zwei Schaltkolben 46 und 47 angeordnet und dichtend geführt. Der Schaltkolben 46 kann einen ersten Kolbenhub in die Stellung Senken (Fig. 3) ausführen, wenn er allein mit Druckluft beaufschlagt wird, was durch Erregung des Magnetventils 6 geschieht. Der Schaltkolben 47 kann einen vergleichsweise kleineren Kolbenhub in die Stellung Fahrt (Fig. 2) zurücklegen, was durch Erregung des Magnetventils 7 allein geschieht. Sämtliche Einzelschieber 26 und 26' liegen an dem Schaltkolben 47 und über diesen an dem Schaltkolben 46 an. Bei gleichzeitiger Erregung der Magnetventile 6 und 7 werden die beiden Hübe der Schaltkolben 46 und 47 unter ihrer Addition zurückgelegt, so daß die Stellung Heben (Fig. 4) erreicht wird. Für die Rückführung der Schaltkolben 46 und 47 in die Ausgangsstellung ist eine Rückführfeder 48 vorgesehen. Über eine Vorratsleitung 49, die an die Einlaßkammer 41 anschließen kann oder auch separat mit einem Vorratsbehälter in Verbindung stehen kann (Fig. 5) steht Druckluft an den beiden Magnetventilen 6 und 7 an, deren Einlaßsitze jedoch in der nicht-erregten Stellung geschlossen sind. Die Magnetventile 6 und 7 besitzen Entlüftungsöffnungen 50 und 51. Von dem Magnetventil 6 führt eine Leitung 52 zu der Wirkfläche 53 des Schaltkolbens 46. Vom Magnetventil 7 führt eine Leitung 54 zu der Wirkfläche 55 des Schaltkolbens 47. Die geometrischen Bedingungen der verschiedenen Hübe der Schaltkolben 46 und 47 und der Abstände der Dichtungen 27 bis 31 voneinander sowie die Durchmessergestaltung der Einzelschieber 26 und 26' und der gestuften Bohrungen 33 und 32' sind entsprechend aufeinander abgestimmt. Diese Abstimmung kann an sich in verschiedener Art und Weise erfolgen, d. h. es gibt mehrere Möglichkeiten, die vier Stellungen Stop, Fahrt, Senken, Heben zu verteilen und den einzelnen Stellungen der Schaltkolben 46 und 47 zuzuordnen. Die grundsätzlichen Möglichkeiten gehen aus der nachfolgenden Tabelle hervor:

| 7 | 6 | | | | | | |
|---|---|---|---|---|---|---|---|
| – | – | Stop | Stop | Stop | Stop | Stop | Stop |
| + | – | Fahren | Senken | Fahren | Heben | Senken | Heben |
| – | + | Senken | Fahren | Heben | Fahren | Heben | Senken |
| + | + | Heben | Heben | Senken | Senken | Fahren | Fahren |

**0 188 706**

Es ist ersichtlich, daß das Ausführungsbeispiel der Fig. 1 bis 4 die erste der sechs Möglichkeiten (Spalten) darstellt bzw. einer solchen Verteilung entspricht. Fig. 1 zeigt die Stopstellung, Fig. 2 die Stellung Fahrt, Fig. 3 die Stellung Senken und Fig. 4 die Stellung Heben. Fig. 5 zeigt beispielsweise eine Anordnung, bei der die Reihenfolge gemäß Spalte 2 verwirklicht ist.

Die Funktion der Anlage gemäß dem Ausführungsbeispiel der Fig. 1 bis 4 arbeitet wie folgt :.

In der Ausgangsstellung Stop gemäß Fig. 1 sind die Leitung 17 und 18 von den Niveauregelventilen 15 und 16 durch die Dichtungen 28 und 29 abgesperrt. Andererseits sind auch die Leitungen 21 und 22 zu den Luftfederbälgen 23 und 24 durch die Dichtungen 27 und 28 abgesperrt. Das Einlaßventil 39, 40 ist geschlossen. Das Auslaßventil 27, 44 ist geöffnet. Die Magnetventile 6 und 7 sind nicht erregt, so daß die Wirkflächen 53 und 55 der Schaltkolben 46 und 47 über die Entlüftungsöffnungen 50 und 51 entlüftet, d. h. an die Atmosphäre angeschlossen sind. Die Rückführfeder 48 hält die Schaltkolben 46 und 47 in ihrer Ausgangsstellung. Die nicht erregte Stellung der Magnetventile 6 und 7 stellt sich immer dann ein, wenn an dem Schalter 1 eine der beiden Stellungen Stop eingestellt wird. Dieselbe Relativlage der Teile ergibt sich auch dann, wenn die Stromversorgung ausfällt, so daß die Magnetventile 6 und 7 stromlos werden.

Wird der Schalter 1 in die Stellung Fahrt verschwenkt, dann wird lediglich das Magnetventil 7, nicht aber das Magnetventil 6 erregt und es ergibt sich eine Relativlage der Teile, wie sie aus Fig. 2 ersichtlich ist. Der Schaltkolben 46 verbleibt in Ruhe, während der Schaltkolben 47 seinen entsprechenden Hub bis zum Anschlag in dem Schaltkolben 46 zurücklegt. Demzufolge werden die beiden Einzelschieber 26 und 26' um den entsprechenden Weg verschoben. Die Dichtungen 28 gelangen in einen erweiterten Bereich der gestuften Bohrungen 32 und 32', so daß jeweils die Leitung 17 mit der Leitung 22 einerseits und die Leitung 18 mit der Leitung 21 andererseits verbunden werden. Die Dichtungen 27 befinden sich auch weiterhin in der Dichtposition. Die Niveauregelventile 15 und 16 steuern nun entsprechend dem Beladungszustand entsprechend Druckluft in die Federbälge 23 bzw. 24 aus. Dies kann dauernd geschehen, wobei allerdings das Magnetventil 7 auch dauernd erregt bleiben muß. Wird diese Dauererregung nicht gewünscht, dann ist es möglich, innerhalb der Stromversorgungseinrichtung 3 einen zeitabhängigen Unterbrecher 56 anzuordnen, der nach einer einstellbaren oder wählbaren Zeit die Stromzufuhr zu den Magnetventilen 7 und/oder 6 unterbricht, so daß sich nach dem Ablauf der Haltezeit wieder die Stopstellung einstellt.

Wird andererseits der Schalter 1 in die Stellung Senken verschwenkt, dann wird nur das Magnetventil 6, nicht aber das Magnetventil 7 erregt, so daß sich eine Relativlage der Teile ergibt, wie sie Fig. 3 erkennen läßt. Der Schaltkolben 46 legt einen vergleichsweise größeren Weg zurück und nimmt dabei den Schaltkolben 47 mit, der aber seinerseits auf seiner Wirkfläche 55 nicht von Druckluft beaufschlagt wird. Damit werden die Leitungen 17 und 18 zu den Niveauregelventilen 15 und 16 durch die Dichtungen 29 und 31 abgesperrt. Außerdem kommen die Dichtungen 27 durch Einfahren in den erweiterten Druckraum 42 von ihrer Dichtposition frei, so daß die Leitungen 21 und 22 über die Entlüftungsbohrung 45 an die Atmosphäre angeschlossen werden. Aus den Luftfederbälgen 23 und 24 kann die Druckluft zeitabhängig entweichen, so daß der Fahrzeugaufbau abgesenkt wird.

Werden schließlich beide Magnetventile 6 und 7 gleichzeitig erregt, so ergibt sich die Relativlage entsprechend Fig. 4 mit der Stellung Heben. Es addieren sich die Hübe der Schaltkolben 46 und 47, was zur Folge hat, daß die Einzelschieber 26 und 26' in die dargestellte Lage verschoben werden. Hierbei sind die Leitungen 17 und 18 zu den Niveauregelventilen 15 und 16 durch die Dichtungen 29 und 30 abgesperrt. Das Auslaßventil 27, 44 ist geschlossen und der Fortsatz 60 an dem Einzelschieber 26' hat das Einlaßventil 39, 40 geöffnet, so daß Druckluft aus dem Druckluftvorratsbehälter 9 über die Leitung 10, das Rückschlagventil 11, den Anschluß 12 und den Druckraum 42 letztlich über die Leitungen 21 und 22 zu den Luftfederbälgen 23 und 24 gelangen kann. Diese Bälge werden damit zeitabhängig aufgefüllt. Der Fahrzeugaufbau hebt sich an.

Das Ausführungsbeispiel gemäß Fig. 5 ist an sich ganz ähnlich aufgebaut. Hierbei sind lediglich die Einzelschieber 26 und 26' mit vergleichsweise weniger Dichtungen 27, 28, 29 ausgestattet. Es fehlt die von dem Anschluß 12 nach oben geführte Vorratsleitung 49, die stattdessen auf direktem Wege separat von dem Vorratsbehälter 9 herangeführt ist. Es ist nur ein Niveauregelventil 15 vorgesehen, dessen beide Steuerleitungen 17 und 18 in der dargestellten Weise angeschlossen sind. Das Niveauregelventil 15 wird über die Leitung 13 mit Vorratsluft versorgt. Andererseits führt die Leitung 10 Druckluft über eine Sperreinrichtung am Niveauregelventil 15 zum Anschluß 12. Die Geometrie der Einzelschieber 26 und 26' sowie der gestuften Bohrungen 32 und 32' ist hier etwas anders ausgebildet, so daß sich im Sinne jeweils größer werdender Hübe eine Schaltreihenfolge Stop, Senken, Fahren und Heben ergibt. Die Funktion ist ansonsten analog derjenigen des Ausführungsbeispiels der Fig. 1 bis 4.

Die in Fig. 6 dargestellte Steueranlage ist an sich in Aufbau und Funktion wiederum ähnlich, wobei für vergleichbare Teile identische Bezugszeichen angegeben sind. Der Schalter 1 ist hier so ausgebildet, daß aus einer Mittelstellung, die der Stellung Stop zugeordnet ist, jeweils entweder die Stellungen Senken, Heben und Fahrt erreicht werden können, während von einer aktiven Stellung in eine andere aktive Stellung nur dadurch umgeschaltet werden kann, daß die Mittelstellung Stop durchfahren wird. Bei dieser Anlage sind wiederum zwei Niveauregelventile 15 und 16 vorgesehen, wobei es sich versteht, daß selbstverständlich auch nur ein Niveauregelventil eingesetzt werden könnte. Es ist hier nur ein einziger Einzelschieber 26 vorgesehen, der aber nun sämtliche Dichtungen 27, 28, 29, 29a, 30, 31, 31a aufnimmt,

5

die in der dargestellten Relativlage vorgesehen sind. Dargestellt ist in Fig. 6 die Stellung Stop, bei der sowohl die Leitungen 17 und 18 einerseits als auch die Leitungen 21 und 22 jeweils andererseits abgesperrt sind. Werden die beiden Magnetventile 6 und 7 nicht erregt, entspricht dies der Stellung Stop. Wird das Magnetventil 7 allein erregt, stellt sich die Stellung Fahrt ein. Der Erregung des Magnetventils 6 allein entspricht die Stellung Senken. Die Funktion Heben wird durch gleichzeitige Erregung der Magnetventile 6 und 7 erreicht.

Bezugszeichenliste :

1 = Schalter
2 = Verbindungsleitungen
3 = Stromversorgungseinrichtung
4 = elektrische Leitung
5 = elektrische Leitung
6 = Magnetventil
7 = Magnetventil
8 = Schaltventil
9 = Vorratsbehälter
10 = pneumatische Leitung
11 = Rückschlagventil
12 = Anschluß
13 = pneumatische Leitung
14 = pneumatische Leitung
15 = Niveauregelventil
16 = Niveauregelventil
17 = Leitung
18 = Leitung
19 = Anschluß
20 = Anschluß
21 = Leitung
22 = Leitung
23 = Luftfederbalg
24 = Luftfederbalg
25 = Gehäuse
26 = Einzelschieber
27 = Dichtung
28 = Dichtung
29 = Dichtung
30 = Dichtung
31 = Dichtung
32 = Bohrung
33 = Anschluß
34 = Anschluß
35 = Nut
36 = Nut
37 = Verbindungskanal
38 = Auslaßraum
39 = Gehäuserand
40 = Ventilkörper
41 = Einlaßkammer
42 = Druckraum
43 = Feder
44 = Rand
45 = Entlüftungsbohrung
46 = Schaltkolbe
47 = Schaltkolben
48 = Rückführfeder
49 = Vorratsleitung
50 = Entlüftungsöffnung
51 = Entlüftungsöffnung
52 = Leitung
53 = Wirkfläche
54 = Leitung
55 = Wirkfläche
56 = Unterbrecher
60 = Fortsatz

# 0 188 706

## Patentansprüche

1. Steueranlage zum willkürlichen Heben und Senken des Fahrzeugaufbaus von luftgefederten Fahrzeugen mit Niveauregelung, mit einer Druckluftquelle (9), mindestens einem Niveauregelventil (15, 16), mindestens einer Fahrzeugachse zugeordneten Luftfederbälgen (23, 24), die zur Einregelung eines Sollabstandes zwischen Fahrzeugaufbau und Fahrzeugachse durch das zugeordnete Niveauregelventil mit der Druckluftquelle oder einem drucklosen Auslaß verbindbar sind, und einem in die Leitungsverbindungen der Niveauregelventile mit den Luftfederbälgen oder mit der Druckluftquelle und dem drucklosen Auslaß eingebauten Schaltventil (8) mit den Stellungen Heben, Senken, Fahrt und Stop, das mindestens einen über einen elektrischen Schalter (1) und zwei Magnetventile (6, 7) fernbetätigbaren Schieber (26, 26') und eine Ventilkonstruktion aufweist, und die Leitungsverbindung in der Stellung Fahrt freigibt und in den übrigen Stellungen unterbricht und die Luftfederbälge in der Stellung Heben mit der Druckluftquelle und in der Stellung Senken mit dem drucklosen Auslaß verbindet, dadurch gekennzeichnet, daß bei drucklosem Schaltventil (8) und/oder stromlosen Magnetventilen (6 und 7) der Schieber (26, 26') des Schaltventils (8) so ausgebildet ist und sich In einer solchen Ausgangsstellung befindet, daß die pneumatischen Leitungen (17, 18, 21 und 22) von dem Schaltventil (8) zu den Niveauregelventilen (15 und 16) einerseits und zu den Luftfederbälgen (23 und 24) andererseits jeweils abgesperrt sind, und daß die Stellungen Heben, Senken und Fahrt den drei betätigten Stellungen der beiden Magnetventile (6 und 7) zugeordnet sind.

2. Steueranlage nach Anspruch 1, dadurch gekennzeichnet, daß die Stellung Fahrt der Betätigung nur eines Magnetventils (7) und die Stellung Heben der Betätigung beider Magnetventile (6 und 7) zugeordnet ist.

3. Steueranlage nach Anspruch 1 oder 2, dadurch gekennzeichnet, daß der elektrische Schalter (1) des Schaltventils (8) eine Mittelstellung aufweist, die der Stellung Stop zugeordnet ist, und daß die drei übrigen Stellungen nur aus dieser Mittelstellung oder über diese Mittelstellung erreichbar sind.

4. Steueranlage nach Anspruch 1 bis 3, dadurch gekennzeichnet, daß den Magnetventilen (6 und 7) des Schaltventils (8) ein zeitabhängiger Unterbrecher (56) vorgeschaltet ist.

## Claims

1. Control system for the arbitrary raising and lowering of the vehicle body of air-suspended vehicles with level control, with a compressed air source (9), at least one level control valve (15, 16), pneumatic bellows (23, 24) assigned to at least one vehicle axle and capable of being connected by the assigned level control valve to the compressed air source or to a pressureless outlet for adjustement of a set distance between vehicle body and vehicle axle, and with a pilot valve (8), installed in the line unions of the level control valves with the pneumatic bellows or with the compressed air source and the pressureless outlet, with the positions raise, lower, go and stop, which pilot valve has at least one slide (26, 26'), which can be remotely controlled via an electric switch (1) and two solenoid valves (6, 7), and a valve construction, and releases the line union in the go position and interrupts it in the remaining positions and connects the pneumatic bellows to the compressed air source in the raised position and connects them to the pressureless outlet in the lower position, characterized in that, with pressureless pilot valve (8) and/or currentless solenoid valves (6 and 7), the slide (26, 26') of the pilot valve (8) is so designed and is in such an initial position that the pneumatic lines (17, 18, 21 and 22) from the pilot valve (8) to the level control valves (15 and 16) on the one hand and to the pneumatic bellows (23 and 24) on the other hand are in each case blocked off, and in that the positions raise, lower and go are assigned to the three actuated positions of the two solenoid valves (6 and 7).

2. Control system according to Claim 1, characterized in that the go position is assigned to the actuation of only one solenoid valve (7) and the raise position is assigned to the actuation of both solenoid valves (6 and 7).

3. Control system according to Claim 1 or 2, characterized in that the electric switch (1) of the pilot valve (8) has a middle position which is assigned to the stop position and in that the three remaining positions can only be reached from this middle position or via this middle position.

4. Control system according to Claims 1 to 3, characterized in that a time-dependent interrupter (56) is connected ahead of the solenoid valves (6 and 7) of the pilot valve (8).

## Revendications

1. Appareil de commande du levage et de l'abaissement à volonté de la caisse de véhicules à suspension pneumatique comportant un réglage de niveau, une source d'air comprimé (9), au moins une valve de réglage de niveau (15, 16), des ressorts pneumatiques (23, 24) affectés à au moins un essieu du véhicule, qui peuvent être reliés à la source d'air comprimé ou à une sortie sans pression en vue de la création d'un écart prescrit entre la caisse du véhicule et l'essieu du véhicule grâce à la valve de réglage de niveau qui leur est affectée, ainsi qu'une valve de commutation (8) incorporée dans les conduits de

7

liaison des valves de réglage de niveau avec les ressorts pneumatiques ou avec la source d'air comprimé et la sortie sans pression, comportant les positions de levage, d'abaissement, de marche et d'arrêt, ladite valve de commutation présentant au moins un tiroir (26, 26') actionnable à distance par l'intermédiaire d'un interrupteur électrique (1) et de deux valves à solénoïde (6, 7) et qui présente une structure de valve, qu'ouvre le conduit de liaison en position de marche et le ferme dans les autres positions, et qui relie les ressorts pneumatiques à la source d'air comprimé dans la position de levage et à la sortie sans pression dans la position d'abaissement, caractérisé par le fait que la valve de commutation (8) n'étant pas soumise à la pression et/ou les valves à solénoïde (6 et 7) étant hors tension, le tiroir (26, 26') de la valve de commutation (8) est conformé de façon telle, et se trouve dans une position de départ telle, que les conduits pneumatiques (17, 18, 21 et 22) allant de la valve de commutation (8), d'une part aux valves de réglage de niveau (15, 16) et d'autre part aux ressorts pneumatiques (23 et 24) sont dans chaque cas fermés et que les positions de levage, d'abaissement et de marche correspondent aux trois positions vers lesquelles peuvent être actionnées les deux valves à solénoïde (6 et 7).

2. Appareil de commande selon la revendication 1, caractérisé par le fait que la position de marche correspond à l'actionnement d'une seule valve à solénoïde (7) et la position de levage correspond à l'actionnement des deux valves à solénoïde (6 et 7).

3. Appareil de commande selon la revendication 1, ou 2, caractérisé par le fait que l'interrupteur électrique (1) de la valve de commutation (8) présente une position moyenne qui est affectée à la position d'arrêt et que les trois autres positions ne peuvent être atteintes qu'à partir de cette position moyenne ou bien en passant par celle-ci.

4. Appareil de commande selon les revendications 1 à 3, caractérisé par le fait qu'un interrupteur (56) à minuterie est installé en amont des valves à solénoïde (6 et 7) de la valve de commutation (8).

0 188 706

Fig.1

heben
Stop
fahren
Stop
senken

Fig. 2

0 188 706

Fig. 3

Fig. 4

Fig. 5

Fig.6